# EUROPEAN PATENT SPECIFICATION

(11) **EP 1 490 201 B1**
(45) Date of publication and mention of the grant of the patent: **30.07.2008**
(21) Application number: 03714561.2
(22) Date of filing: 25.03.2003
(51) Int. Cl.: B29C 33/38, B29C 33/42, B23P 15/24

(54) **METHOD FOR MAKING A MOULD FOR PRODUCING AN ELASTOMERIC SKIN**
VERFAHREN ZUM HERSTELLEN EINER FORM ZUM HERSTELLEN EINER HAUT AUS ELASTOMER
PROCEDE POUR REALISER UN MOULE POUR PRODUIRE UN FILM ELASTOMERE

(30) Priority: 25.03.2002 EP 02447044
(43) Date of publication of application: 29.12.2004
(73) Proprietor: Recticel, 1140 Brussel (Evere) (BE)
(72) Inventor: DE WINTER, Hugo Recticel, B-9230 Wetteren (BE); GENETELLO, Mario Recticel, B-9230 Wetteren (BE)
(74) Representative: Van Reet, Joseph
(86) International application number: PCT/BE2003/000053
(87) International publication number: WO 2003/080309

(56) References cited:
- EP-A- 0 342 473
- WO-A-00/58066
- US-A- 4 937 030
- US-A- 5 492 663
- US-A- 5 538 674
- US-A- 5 759 473

## Description

The present invention relates to a method for making a mould for producing at least an elastomeric skin in particular by a spray, RIM or slush moulding process, which skin shows a front surface having a predetermined texture being an impression of a desired texture, which method comprises the steps of providing a supporting mould structure; and arranging a liner structure on the mould structure to provide a mould surface having a size and a shape corresponding to the size and the shape of the front surface of the elastomeric skin and showing a texture which is a negative of said predetermined texture, the liner structure being provided with said negative texture by applying an elastic sheet material onto a master model structure to provide a master model showing a surface formed by the elastic sheet material and having a size and a shape corresponding to the size and the shape of said mould surface, the elastic sheet material being stretched when applying it onto the master model structure, and by making the liner structure as a direct impression of the master model or as an impression of one or more intermediate impressions of the master model, said direct impression or respectively said impression and said intermediate impressions being made by gradually depositing impression material on the master model or on any intermediate impression or by a moulding process wherein a flowable impression material is applied onto the master model or onto one of said intermediate impressions and wherein the flowable impression material is allowed to set to produce the impression.

In a method which is used in practice, the liner structure comprises a galvano plate which is made by electrodepositing nickel in a nickel plating bath or galvano cell onto a bath model. This bath model is made by a number of successive impressions from a master model which has a surface with a size and a shape corresponding to the size and the shape of the mould surface, the master model being more particularly a negative of the mould surface or in other words a positive of the moulded skin. The required texture on the master model is provided by applying an elastic sheet material, showing the required texture, onto a master model structure, more particularly onto a so-called ureol model. The elastic sheet is a thermoplastic PVC film having the required texture embossed thereon according to a so-called "präging" process wherein the film is embossed under pressure by means of an embossing roll. The embossing roll is heated somewhat so that the film is plastically deformed without melting the PVC material. The thus embossed PVC films show an elongation at break of 200 - 250% and a tensile strength of 8 - 14 MPa, both measured according to ISO 527-3/2/100, and a tear resistance of 30 - 55 N/mm, measured according to DIN 53515. In practice the embossed films are produced in large quantities for use in thermo-forming processes, such as deep-drawn processes, to produce for example the elastomeric skin of trim parts for automobiles such as dash boards, glove compartments, consoles, door panels, etc.

A drawback of the above described technique is that the quality of the texture provided on the embossing roll is reduced considerably when transferring the desired texture from the roll to the thermoplastic film. This is for example due to the presence of variations in temperature on the surface of the roll, variations in pressure between the roll and the film, differences in slip between the roll and the film in the axial direction of the roll and possible damages to the roll. In practice, in one particular example of a PVC film embossed with a leather structure, variations in the maximum peak to valley heights R_{z} (measured as an average in accordance with ISO 4287-1997 and ISO 11 562 over a sampling length λ_{c} determined in accordance with ISO 4288-1996 measured in the same location in different areas with a repeating pattern) from 90 to 140 µm (and usually even greater) and variations of the gloss of the film from 1.6 to 2.4 have been observed. Such variations result in a lower quality of the moulds and of the parts produced therein, which consequently have not only worse visual but also worse touch characteristics. A further drawback of the existing technique is that the installation for embossing a thermoplastic film by means of an embossing roll is too expensive for making at the most a few square meters of elastic sheet material required to produce a master model. Moreover, in order to bring the installation to the required process conditions, some hundreds square meters of film have to be produced, most of which is waste material.

EP-A-0 342 473 discloses another method for making a mould for producing an elastomeric skin by a spray process. In this known method the liner structure for the mould is formed by a spray process onto a master model. This European patent application however does not disclose the presence of a texture onto the master model and it does also not describe how the master model is made. Moreover, for applying the liner structure onto the mould structure, the liner structure has to be deformed considerably so that, in case a texture would be provided on the master model, this texture would be deformed considerably.

US-A-4 937 030 discloses a method for making a mould for producing an elastomeric skin for dashboards by a slush moulding process. The mould is made starting from a prototype onto which a foamed synthetic layer is applied which is roughened by treatment with a leather watermarking machine to define a nonglare, nonreflective surface. The front side of the prototype is provided with a leather portion. No description is given about the way this leather portion is made.

WO 00/58066 discloses a method for making a mould for producing interior trim parts for the automotive industry. The mould is made again starting from a prototype. This prototype is textured by applying relief material onto a release backing. The relief material is adhered onto the prototype and the release backing is subsequently removed. The relief material is produced by cutting "islands" out of a matrix.

An object of the present invention is now to provide a new method for producing a mould which enables to transfer the desired texture with a higher accuracy to the mould surface so that parts with a higher quality, such as better visual and touch characteristics, can be produced in the mould.

To achieve this object the method according to the invention stipulates that the elastic sheet material is made as a direct impression of a starting material or as an impression of one or more intermediate impressions of a starting material, which starting material shows the desired texture or the desired texture being cut in the starting material, said direct impression or respectively said impression and said intermediate impressions being made by a further moulding process wherein a flowable impression material having a Brookfield viscosity at application temperature smaller than 100 Pa.s, preferably smaller than 50 Pa.s, is applied in a layer onto the starting material or on one of said intermediate impressions and wherein the impression material is allowed to set to produce the impression, upon being applied onto the starting material or onto one of said intermediate impressions the flowable impression material or materials used in said further moulding process having such a Brookfield viscosity at the application temperature that they can be poured by gravity out of a container.

In this method the elastic sheet material used to make the master model is made starting from a starting material which shows the desired texture or wherein the desired texture is cut. The loss of quality of the texture is reduced in the method according to the invention compared to the above described existing technique due to the fact that, for moulding the elastic sheet, use is made of an impression material or impression materials which have such a Brookfield viscosity smaller than 100 Pa.s that they can be poured out of a container. The PVC film used in the existing technique becomes on the contrary not flowable but is only heated so that it can be plastically deformed. The existing mould making processes enable to make the mould surface with a minimum loss of quality starting from the master model. The existing method for making the mould liner starting from a master model uses indeed a gradual deposition process (nickel plating process) and moulding processes wherein silicone mouldings (impressions) are made in a closed mould so that high quality impressions can be made.

The present invention also relates to a method which comprises the further step of using the mould to produce elastomeric skins by a spray, RIM or slush moulding process against said mould surface.

Due to the use of moulds made in accordance with the present invention, elastomeric skins showing a more uniform texture or a texture of a better quality, i.e. a texture which approaches more the desired texture from which the mould making process starts, can be achieved.

Other particularities and advantages of the invention will become apparent from the following description of some particular embodiments of the method and the mould according to the present invention. The reference numerals used in this description relate to the annexed drawings which illustrate the different steps of the mould making process according to a particular embodiment of the invention and wherein:
Figure 1 shows a schematic sectional view on a roll provided with a sleeve of a starting material wherein the desired texture is being cut by means of a laser;
Figure 2 shows a schematic sectional view on a vacuum table wherein the starting material is positioned and wherein an impression material is poured to produce a first impression of the starting material;
Figure 3 is a view similar to Figure 2 wherein the impression material is set to form an elastic sheet material as first impression;
Figure 4 shows a sectional view of the elastic sheet material;
Figure 5 illustrates on a larger scale the quality of the texture on the first impression, i.e. onto the elastic sheet material, when using the prior art "präging" process and the moulding process according to the present invention, the figure illustrating both the contour of the texture onto the starting material and the contour of the texture on the elastic sheet material, the texture on the "präged" prior art PVC film being illustrated in dashed lines;
Figure 6 shows a sectional view of a master model structure, more particularly of a so-called ureol model;
Figure 7 shows the ureol model illustrated in Figure 6 having applied thereon the textured elastic sheet material to form the master model;
Figure 8 illustrates the master model of Figure 7 arranged together with a support shell in a mould to produce an intermediate silicone impression;
Figure 9 illustrates the silicone impression of Figure 8 which is arranged, together with the support shell, in a reversed position in a further mould wherein a gel coat and a glass fibre-epoxy layer are moulded on top of the silicone impression to produce a so-called bath model;
Figure 10 illustrates the bath model immersed in a nickel plating bath wherein a nickel shell is deposited by electric current onto the bath model, and

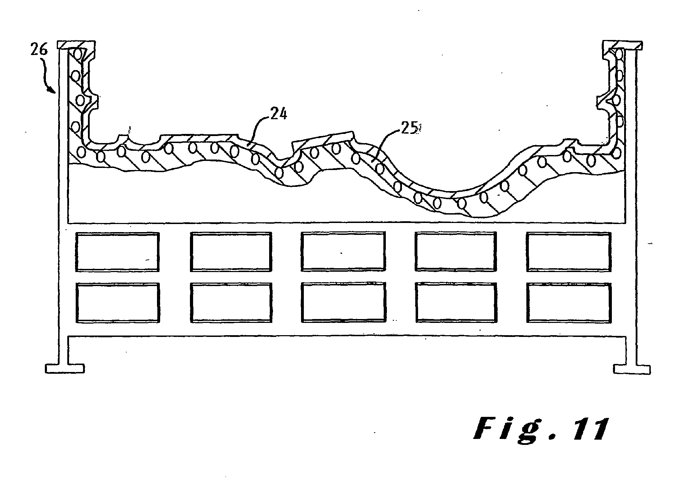

Figure 11 illustrates the nickel shell arranged on a supporting mould structure to produce the mould.

In the method according to the invention illustrated in the figures a desired texture is first of all cut in a starting material 1. The starting material 1 is for example a silicone rubber sleeve or a "Novotek" sleeve which is applied onto a roll 2. By means of a mechanical milling device, but preferably by means of a laser 3 with laser beam 4, the desired texture is cut in the starting material 1. The laser cutting technique is already known per se and disclosed for example in US-A-5 759 473 so that it will not be described in great detail. The roll 2 is for example rotated while the laser beam 4 is guided over the peripheral surface parallel to the axis of rotation in such a manner that essentially the entire peripheral surface is treated. During this movement of the laser beam 4 relative to the surface of the roll 2, the intensity of the laser beam 4 is controlled as a function of a control signal which may be obtained by scanning the surface of a patterned original or an artificially designed texture can be developed. In case of an existing texture, for example a leather, wood, stone or any other texture, the surface may be scanned optically or mechanically, and an electric signal is generated in accordance with the scanning results and may be used directly to control the position and intensity of the laser. A preferred alternative consists however in temporarily storing the electric signal obtained by scanning the patterned original. In this way the scanned texture can be processed to modify it.

In the prior art method, the laser cut roll is used to emboss a thermoplastic PVC film at a relatively high output by a continuous calendering process.

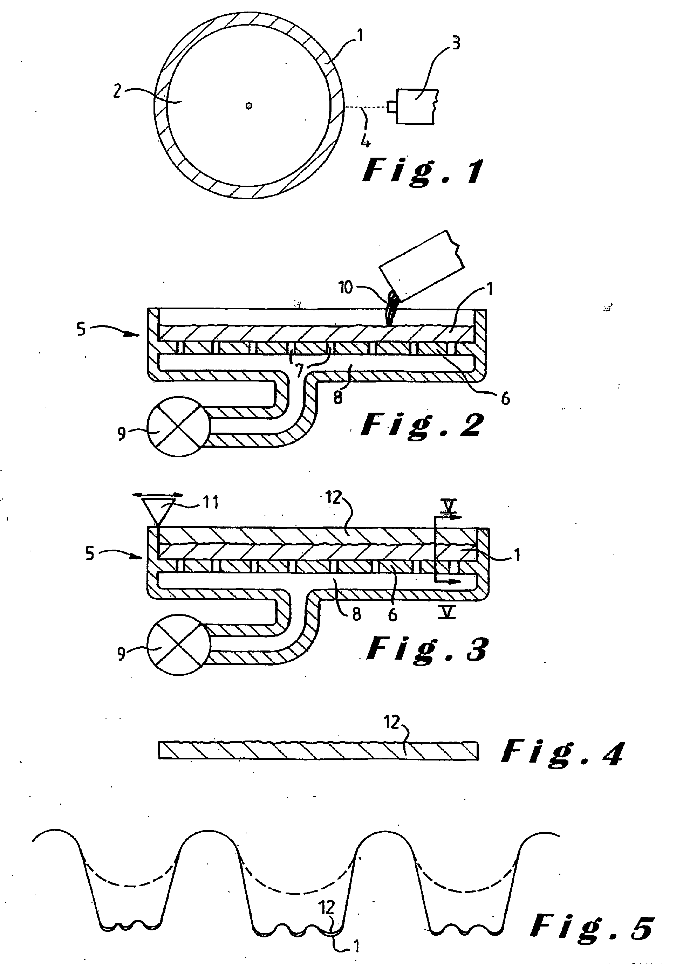

In the method according to the present invention, at the most a few impressions have to be made of the starting material 1, but these impressions have to be of a better quality. As illustrated in Figure 2, the sleeve of starting material 1 can be removed from the roll 2 and positioned in a flat state on a vacuum table 5. This vacuum table 5 has a flat bottom 6 provided with holes 7 ending in a chamber 8 wherein a vacuum is created by means of a vacuum pump 9 so that the sheet of starting material is kept in a flat position. Referring to Figure 3, a flowable impression material 10 is poured in a next step onto the starting material 1 and is scraped off by means of a scraper 11. After having allowed the impression material 10 to set, the sheet material 12 produced thereby is demoulded. This sheet material has for example an average thickness (calculated by dividing its volume by its surface area) of between 20 µm and 5 mm, and preferably between 0.5 mm and 2 mm, and is illustrated in Figure 4.

As impression material for producing the sheet material 12, use is made of a material which produces an elastic sheet material, showing in particular an elongation at break, measured according to ISO 527-3/2/100, of at least 20%, preferably of at least 50% and more preferably of at least 100%. Such an impression material may be a thermoplastic material such as PVC, TPO or TPU, a flowable silicone rubber or a reactive mixture such as a polyurethane reaction mixture composed of an isocyanate and a compound, in particular a polyalcohol or a polyamine, comprising groups which are reactive to the isocyanate compound. An essential feature of the impression material is that, at the temperature at which It is applied onto the starting material, it should have a Brookfield viscosity smaller than 100 Pa.s, in particular smaller than 50 Pa.s, so that it can copy the texture of the starting material sufficiently accurately. The thermoplastic materials should therefore be heated to a sufficiently high temperature and/or contain a sufficient amount of plasticizers in order to be suited for use as impression material. It should be noted that materials with the highest viscosities are in the form of a paste which requires some smearing action and/or some pressure in order to fill the surface relief of the starting material sufficiently completely. The term "flowable material" is therefore to be understood in the present specification as embracing not only materials which can be poured simply by gravity out of a container but also materials to which some pressure has to be applied in order to flow. The impression materials used in the method according to the invention for producing the elastic sheet material should however have such a Brookfield viscosity that they can be poured by gravity out of a container. In the method according to the invention, preference is given to materials which have even a lower viscosity at application temperature, more particularly a Brookfield viscosity smaller than 30 Pa.s, preferably smaller than 20 Pa.s and more preferably smaller than 10 Pa.s. Silicone rubbers, having a viscosity of for example 20 to 25 Pa.s, but especially polyurethane reaction mixtures, having an initial viscosity which is smaller than 10 Pa.s, or even smaller than 5 Pa.s, are preferred.

Examples of suitable polyurethane reaction mixtures can be found in EP-B-0 379 246, especially in Examples 1 to 18 thereof. For the present invention, some modifications can be applied to these examples. In view of the fact that for the present invention the curing time is of minor importance, the catalysts could for example be omitted or reduced and less reactive compounds could be used, for example a longer polyol and/or a polyol having a lower functionality, for example a minimum functionality of two, so as to achieve an even more elastic polyurethane. Instead of an aliphatic isocyanate, it is on the other hand possible to use a more reactive aromatic isocyanate.

The advantage of the use of a low viscous impression material, in particular a low viscous reaction mixture, is illustrated in Figure 5. This Figure illustrates the profile of the desired texture cut in the starting material 1 and the profile of the resulting texture on the elastic sheet material moulded on top of the starting material. With a low viscous material less than 5% more particularly only 1 to 3 % of the quality, especially of the maximum peak to valley heights R_{z}, will be lost by making the impression due to the fact that the small recesses of the fine texture will usually not be filled completely. With the existing mechanical embossing process on the contrary, even the larger recesses of the coarse texture will not be completely filled resulting in a considerable loss of quality. In the example illustrated in Figure 5, the fine texture superimposed onto the basic coarser texture is for example completely lost.

In the method according to the invention, a more uniform elastic sheet material can be made on the basis of the laser cut starting material than in the existing calendering process. In case a repeating pattern is provided on the elastic sheet material 12, the maximum peak to valley heights R_{z} (measured as an average in accordance with ISO 4287-1997 and ISO 11 562 over a sampling length λ_{c} determined in accordance with ISO 4288-1996) measured in the same location (where the elastic sheet material shows the same surface profile) in the different areas with repeating pattern vary for example within a range of less than 15%, in particular even less than 10%, above and below the average of the measured peak to valley heights in the different areas. When using such high quality textured sheet materials for making mould for adjoining trim parts, for example for a dash board and for a glove compartment cover or for an air bag, there will be no noticeable contrast between the texture qualities of these parts.

For making the elastic sheet material 12 the flowable impression material 10 can be poured onto the starting material 1 as described hereabove. Instead of pouring the impression material 10, it could also be sprayed, for example by applying the technique disclosed for a polyurethane reaction mixture in EP-B-0 303 305. The impression material could even be sprayed directly onto the roll 2, i.e. without removing the starting material therefrom, so that no vacuum table would be required. The impression material can also be smeared onto the textured surface. Moreover, it is possible to exert a pressure onto the impression material so that it penetrates even better in the smallest recesses of the textured surface, for example by injecting the flowable material under pressure in a closed mould cavity. Of course, the applied pressure should not be too large to avoid deformations of the textured surface. In practice, a RIM (reaction injection moulding) process should for example be suitable, in particular a polyurethane RIM process.

In the method illustrated in the figures, the elastic sheet material 12 is made as a direct impression of the starting material 1. In a variant embodiment, one or more intermediate impressions could be made by means of impression materials showing the same properties as described hereabove so that the quality of the texture is very little affected by making the different intermediate impressions. Instead of using a starting material 1 wherein the desired texture is cut, it is also possible to start from an existing, in particular natural textured material, such a for example natural leather, a wooden panel, a piece of stone, a solidified sand surface, a metal piece, etc. This textured material can be applied onto the vacuum table or onto another moulding device so that the elastic sheet material 12 can be moulded directly onto this textured material.

In the method illustrated in the figures, the elastic sheet material 12 is used to cover or wrap at least portions of a master model structure 13 in order to achieve a master model 14. If necessary two or more elastic sheets 12 can be made by successive mouldings starting from a same starting material. The master model 14 shows a surface having a size and a shape corresponding to the size and the shape of the surface of the mould to be produced. By a corresponding size and shape is meant in the present specification a size and a shape which are substantially identical to the size and the shape of the mould surface or a size and a shape which are substantially identical to the size and the shape of a negative impression of the mould surface. Consequently, when making the further impressions to achieve the mould surface, no deformations will occur.

When applying the elastic sheet material 12 onto the master model structure 14, it has to be stretched to conform to the shape of this structure, which is possible due to the elastic nature of the elastic sheet material 12.

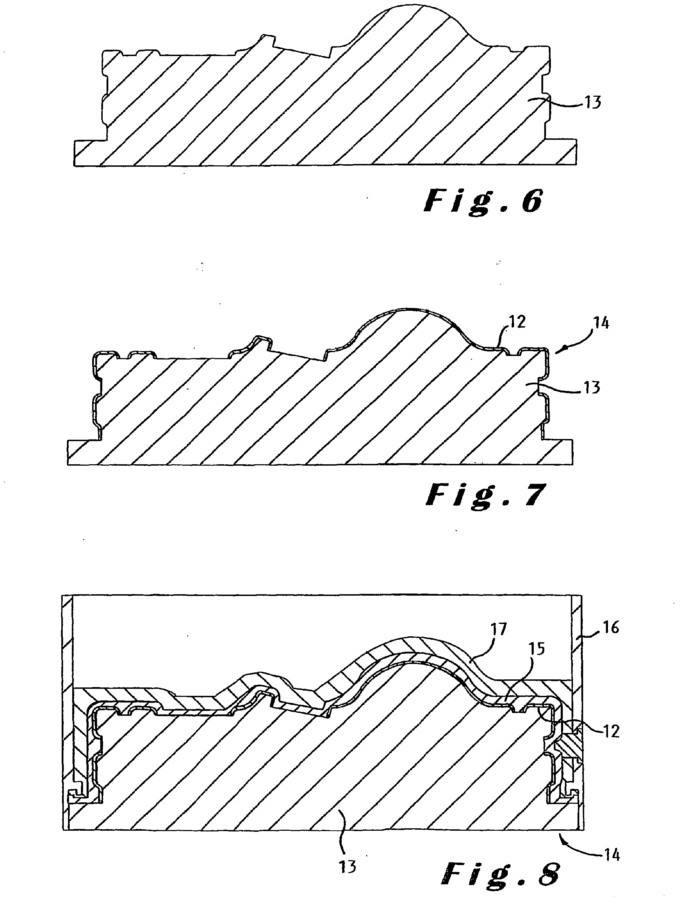

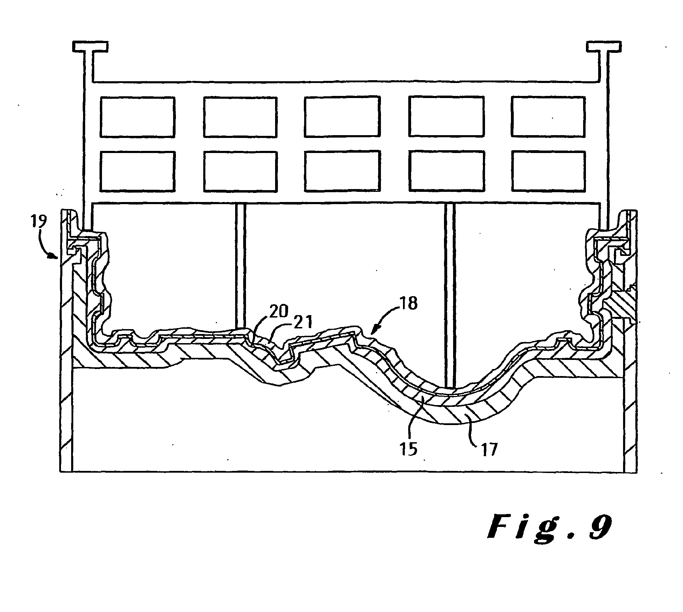

In a next step, illustrated in Figure 8, an intermediate impression is made, more particularly a silicon model 15. The master model 14 is placed in this step in a mould 16 and a support shell 17 is positioned on top of the master model 14 so that a mould cavity is formed. This mould is filled with a silicone composition to produce the silicon model 15. As illustrated in Figure 9, this silicon model 15 is used to produce, as a further intermediate impression, a bath model 18. For making this bath model 18, the silicon model 15 is positioned together with the support shell 17 in a further mould 19 and a gel coat layer 20 and a glass fibre reinforced epoxy layer 21 are moulded on top of the silicon model 15.

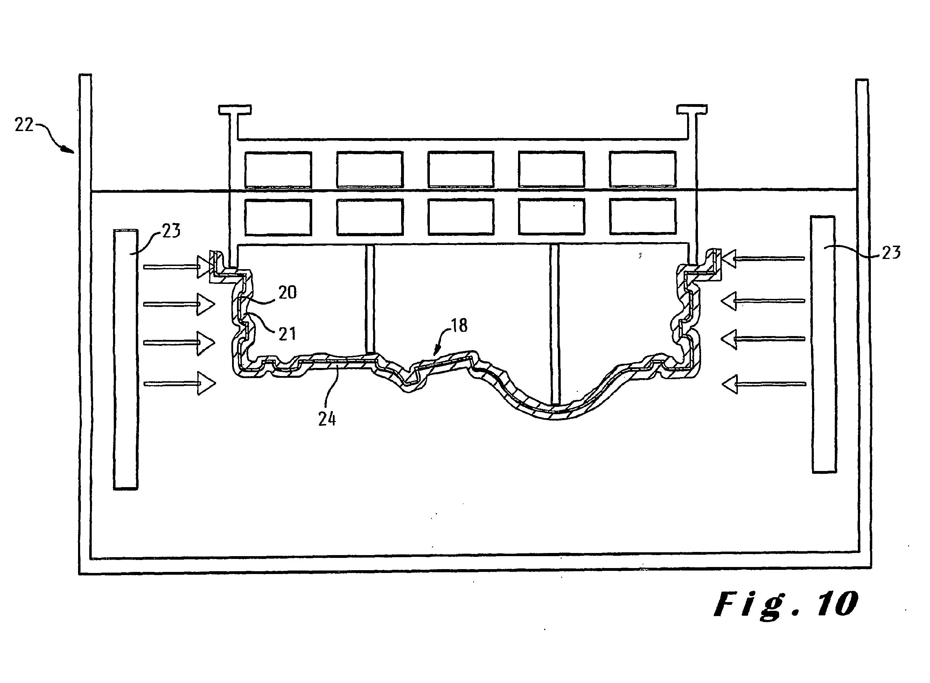

As illustrated in Figure 10, the thus produced bath model 18 is subsequently immersed in an electrolytic bath 22, more particularly in a nickel plating bath or galvanic cell. This bath 22 is filled with an electrolyte solution and two anodes 23 are arranged in the bath. By applying a voltage between the bath model 18 and the anodes 23 an electric current flows in the bath and a metal layer 24, in particular a nickel shell, is gradually deposited onto the bath model 18. This nickel shell 24, showing an imprint of the original desired texture, forms a liner structure which is arranged in a last step onto a supporting mould structure 25 to produce a mould 26, the mould surface of which is formed by the liner structure 24. Instead of using a nickel plating bath, it is also possible to deposit the metal layer onto the bath model by means of a metal vapour deposition process, more particularly by a nickel vapour deposition process. Since such vapour deposition processes are known per se, they will not be described in further detail in the present specification.

In the above described process, the different impressions can be made starting from the master model 14 with such an accuracy that when the master model is provided with a texture showing a repeating pattern, the maximum peak to valley heights R_{z} (measured as an average in accordance with ISO 4287-1997 and ISO 11 562 over a sampling length λ_{c} determined in accordance with ISO 4288-1996) measured in the same location in the different areas with repeating pattern vary within a range of less than 15%, preferably less than 10%, above and below the average of the measured peak to valley heights in the different areas. When the master model is made starting from an elastic sheet which is stretched in certain areas, the maximum peak to valley heights R_{z} have of course to be determined in areas of the mould surface where the elastic sheet was not, or substantially not stretched, since the stretching of the elastic sheet will have an effect on this value. The materials used for making the different intermediate impressions will normally have a viscosity in the same range as the viscosities described hereabove for the impression materials for making the elastic sheet material 12, unless a higher pressure can be used to mould these intermediate impressions. Also the electrolytic or vapour deposition processes produce only a negligible loss of texture quality.

Instead of a metal liner structure, it is also possible to make the liner structure from an elastic material. Such an elastic liner is preferably preshaped so that it has a shape and a size corresponding substantially to the shape and the size of the mould surface of the mould obtained when arranging the liner structure onto the mould structure. The liner structure may consist in particular of a rubber membrane, more particularly of a silicone rubber membrane, moulded in accordance with the shape of the mould surface.

The moulds made in accordance with the methods described hereabove are used to produce an elastomeric skin by a method wherein a flowable skin material is applied onto the mould surface so that a predetermined texture is formed on the front side of the skin. Examples of such methods are spray processes, RIM processes and powder or liquid slush moulding processes. In the method according to the invention preference is given to a spray or a RIM process wherein a liquid polyurethane reaction mixture is applied onto the mould surface. Compared to slush moulding processes wherein the thermoplastic moulding material has to be heated to a temperature which is generally higher than 200°C and wherein the molten material has subsequently to be cooled down rather quickly, a spray or RIM mould is usually heated to a much lower temperature and does not need to be cooled down so that it is less subjected to thermal stresses. In practice, the mould surface of such moulds can therefore be made of materials which can be given a more accurate or a finer texture.

## Claims

1. A method for making a mould (26) for producing at least an elastomeric skin in particular by a spray, RIM or slush moulding process, which skin shows a front surface having a predetermined texture being an impression of a desired texture, which method comprises the steps of :
- providing a mould structure (25); and
- arranging a liner structure (24) on the mould structure (25) to provide a mould surface having a size and a shape corresponding to the size and the shape of the front surface of the elastomeric skin and showing a texture which is a negative of said predetermined texture, the liner structure (24) being provided with said negative texture by applying an elastic sheet material (12) onto a master model structure (13) to provide a master model (14) showing a surface formed by the elastic sheet material (12) and having a size and a shape corresponding to the size and the shape of said mould surface, the elastic sheet material (12) being stretched when applying it onto the master model structure (13), and by making the liner structure (24) as a direct impression of the master model (14) or as an impression of one or more intermediate impressions (15, 18) of the master model (14), said direct impression or respectively said impression and said intermediate impressions being made by gradually depositing impression material on the master model (14) or on any intermediate impression (15, 18) or by a moulding process wherein a flowable impression material is applied onto the master model (14) or onto one of said intermediate impressions (15, 18) and wherein the flowable impression material is allowed to set to produce the impression; and
wherein the elastic sheet material (12) is made as a direct impression of a starting material (1) or as an impression of one or more intermediate impressions of a starting material (1), which starting material (1) shows the desired texture or the desired texture being cut in the starting material (1), said direct impression or respectively said impression and said intermediate impressions being made by a further moulding process wherein a flowable impression material (10) having a Brookfield viscosity at application temperature smaller than 100 Pa.s, preferably smaller than 50 Pa.s, is applied in a layer onto the starting material (1) or on one of said intermediate impressions and wherein the impression material (10) is allowed to set to produce the impression, upon being applied onto the starting material (1) or onto one of said intermediate impressions the flowable impression material (10) or materials used in said further moulding process having such a Brookfield viscosity at the application temperature that they can be poured by gravity out of a container.

2. A method according to claim 1, **characterised in that** the desired texture is cut by means of a laser beam (4) in the starting material.

3. A method according to claim 1 or 2, **characterised in that** said elastic sheet (12) is made by moulding said impression material (10) by spraying, pouring, injecting or smearing it in a layer onto the starting material (1), the impression material (10) being preferably flowable molten PVC, flowable silicone rubber or a liquid polyurethane reaction mixture, preference being more particularly given to the use of a liquid polyurethane reaction mixture.

4. A method according to any one of the claims 1 to 3, **characterised in that** the liner structure (24) is made of a metal or metal alloy which is gradually deposited on the master model (14) or on one of said intermediate impressions (15, 18), in particular by metal plating in an electrolytic cell or by a metal vapour deposition process, the metal being preferably nickel.

5. A method according to any one of the claims 1 to 4, **characterised in that** said elastic sheet (12) shows an elongation at break, measured according to ISO 527-3/2/100, of at least 20%, preferably at least 50% and more preferably at least 100%.

6. A method according to any one of the claims 1 to 5, **characterised in that** it comprises the further step of using the mould (26) to produce elastomeric skins by a spray, RIM or slush moulding process against said mould surface.

7. A method according to claim 6, **characterised in that** the elastomeric skins are produced by applying a polyurethane reaction mixture either by a spray or a RIM process against the mould surface and by allowing the reaction mixture to cure, an in-mould coating, in particular an in-mould paint being optionally first applied against the mould surface.

## Patentansprüche

1. Ein Verfahren zur Herstellung eines Formstücks (26) zur Anfertigung von zumindest einer elastomeren Haut insbesondere durch ein Sprüh-, RIM- oder Slush-Moulding-Verfahren, wobei die Haut eine Vorderseite mit einer vorbestimmten Textur aufweist, welche ein Abdruck einer gewünschten Textur ist, wobei das Verfahren folgende Schritte umfasst:
- Bereitstellung einer Formstückstruktur (25); und
- Anordnung einer Innenschichtstruktur (24) auf der Formstückstruktur (25), um eine Formstückoberfläche zu bieten, die eine Größe und eine Form entsprechend der Größe und der Form der Vorderseite der elastomeren Haut hat und eine Textur aufweist, die ein Negativ der erwähnten vorbestimmten Textur ist, wobei die Innenschichtstruktur (24) mit der erwähnten negativen Textur versehen wird, indem ein elastisches Blattmaterial (12) auf eine Stammmodellstruktur (13) aufgebracht wird, um ein Stammmodell (14) mit einer Oberfläche zu bilden, die durch das elastische Blattmaterial (12) geformt ist und eine Größe und eine Form entsprechend der Größe und der Form der erwähnten Formstückoberfläche hat, wobei das elastische Blattmaterial (12) gedehnt wird, wenn es auf die Stammmodellstruktur (13) aufgebracht wird, und indem die Innenschichtstruktur (24) als ein direkter Abdruck des Stammmodells (14) oder als ein Abdruck eines oder mehrerer Zwischenabdrücke (15, 18) des Stammmodells (14) gemacht wird, wobei der erwähnte Abdruck oder respektive der erwähnte Abdruck und die erwähnten Abdrücke durch allmählichen Auftrag von Druckmaterial auf das Stammmodell (14) oder auf einen beliebigen Zwischenabdruck (15, 18) oder durch ein Formverfahren angefertigt werden, in dem ein fließfähiges Druckmaterial auf das Stammmodell (14) oder auf einen der erwähnten Zwischenabdrücke (15, 18) aufgebracht wird und wobei das fließfähige Druckmaterial die Gelegenheit bekommt, sich zu setzen, um den Abdruck herzustellen; und
wobei das elastische Blattmaterial (12) als ein direkter Abdruck eines Ausgangsmaterials (1) oder als ein Abdruck eines oder mehrerer Zwischenabdrücke eines Ausgangsmaterials (1) gefertigt wird, wobei das Ausgangsmaterial (1) die gewünschte Textur aufweist oder die gewünschte Textur ins Ausgangsmaterial (1) geschnitten wird, wobei der erwähnte direkte Abdruck oder respektive der erwähnte Abdruck und die erwähnten Zwischenabdrücke durch ein weiteres Formverfahren angefertigt werden, in dem ein fließfähiges Druckmaterial (10) mit einer Brookfield-Viskosität bei Auftragstemperatur unter 100 Pa.s, vorzugsweise unter 50 Pa.s, in einer Schicht auf das Ausgangsmaterial (1) oder auf einen der erwähnten Zwischenabdrücke aufgebracht wird und in dem das Druckmaterial (10) die Gelegenheit bekommt, sich zu setzen, um den Abdruck herzustellen, wobei das fließfähige Druckmaterial (10) oder die Materialien, die im erwähnten weiteren Formverfahren verwendet werden, beim Auftrag auf das Ausgangsmaterial (1) oder auf einen der erwähnten Zwischenabdrücke bei der Auftragstemperatur eine solche Brookfield-Viskosität haben, dass sie durch die Schwerkraft aus einem Behälter gegossen werden können.

2. Ein Verfahren nach Anspruch 1, **dadurch gekennzeichnet, dass** die gewünschte Textur mittels eines Laserstrahls (4) in das Ausgangsmaterial geschnitten wird.

3. Ein Verfahren nach Anspruch 1 oder 2, **dadurch gekennzeichnet, dass** das erwähnte elastische Blattmaterial (12) durch Formen des erwähnten Druckmaterials (10) entsteht, indem es in einer Schicht auf das Ausgangsmaterial (1) gesprüht, gegossen, gespritzt oder geschmiert wird, wobei das Druckmaterial (10) vorzugsweise fließfähiges geschmolzenes PVC, fließfähiger Silikongummi oder eine flüssige Polyurethanreaktionsmischung ist, wobei insbesondere die Verwendung einer flüssigen Polyurethanreaktionsmischung bevorzugt wird.

4. Ein Verfahren nach jedem der Ansprüche 1 bis 3, **dadurch gekennzeichnet, dass** die Innenschichtstruktur (24) aus einem Metall oder einer Metalllegierung hergestellt wird, die allmählich auf das Stammmodell (14) oder auf einen der erwähnten Zwischenabdrücke (15, 18) aufgebracht wird, insbesondere durch Metallisierung in einer Elektrolytzelle oder durch Aufdampfen von Metall, wobei das Metall vorzugsweise Nickel ist.

5. Ein Verfahren nach jedem der Ansprüche 1 bis 4, **dadurch gekennzeichnet, dass** das erwähnte elastische Blattmaterial (12) eine Reißdehnung, gemessen nach ISO 527-3/2/100, von mindestens 20 %, vorzugsweise mindestens 50 % und noch besser mindestens 100% aufweist.

6. Ein Verfahren nach jedem der Ansprüche 1 bis 5, **dadurch gekennzeichnet, dass** es den weiteren Schritt zur Verwendung des Formstücks (26) zur Herstellung elastomerer Häute durch ein Sprüh-, RIM- oder Slush-Moulding-Verfahren auf die erwähnte Formstückoberfläche umfasst.

7. Ein Verfahren nach Anspruch 6, **dadurch gekennzeichnet, dass** die elastomeren Häute durch Aufbringung einer Polyurethanreaktionsmischung entweder durch ein Sprüh- oder RIM-Verfahren auf die Formstückoberfläche und durch Aushärten der Reaktionsmischung hergestellt wird, wobei ein Formstückcoating, insbesondere eine Formstückfarbe optional zuerst auf die Formstückoberfläche aufgetragen wird.

## Revendications

1. Procédé pour réaliser un moule (26) pour produire au moins un film élastomère en particulier par un procédé de moulage par pulvérisation, par injection réactive (RIM), par embouage, lequel film présente une surface frontale ayant une texture prédéterminée qui est une impression d'une texture souhaitée, lequel procédé comprend les étapes consistant à :
- prévoir une structure de moule (25), et
- agencer une structure de chemisage (24) sur la structure de moule (25) pour fournir une surface de moule ayant une taille et une forme correspondant à la taille et à la forme de la surface frontale du film élastomère et présentant une texture qui est un négatif de ladite texture prédéterminée, la structure de chemisage (24) étant pourvue de ladite texture négative en appliquant une feuille de matière élastique (12) sur une structure de modèle maître (13) pour fournir un modèle maître (14) présentant une surface formée par la feuille de matière plastique (12) et ayant une taille et une forme correspondant à la taille et à la forme de ladite surface de moule, la feuille de matière élastique (12) étant étirée quand elle est appliquée sur la structure de modèle maître (13), et en réalisant la structure de chemisage (24) comme une impression directe du modèle maître (14) ou comme une impression d'une ou plusieurs impressions intermédiaires (15, 18) du modèle maître (14), ladite impression directe ou encore ladite impression et lesdites impressions intermédiaires étant réalisées en déposant graduellement de la matière d'impression sur le modèle maître (14) ou sur une quelconque impression intermédiaire (15, 18) ou par un procédé de moulage dans lequel une matière d'impression apte à l'écoulement est appliquée sur le modèle maître (14) ou sur une desdites impressions intermédiaires (15, 18) et dans lequel la matière d'impression apte à l'écoulement est laissée à durcir pour produire l'impression, et dans lequel la feuille de matière élastique (12) est réalisée comme une impression directe d'un matériau de départ (1) ou comme une impression d'une ou plusieurs impressions intermédiaires d'un matériau de départ (1), lequel matériau de départ présente la texture souhaitée ou la texture souhaitée étant découpée dans le matériau de départ (1), ladite impression directe ou encore ladite impression et lesdites impressions intermédiaires étant réalisées par un autre procédé de moulage dans lequel une matière d'impression apte à l'écoulement (10) ayant une viscosité Brookfield à une température d'application inférieure à 100 Pa.s, de préférence inférieure à 50 Pa.s, est appliquée en une couche sur le matériau de départ (1) ou sur une desdites impressions intermédiaires et dans lequel la matière d'impression (10) est laissée à durcir pour produire l'impression, lors de l'application sur le matériau de départ (1) ou sur une desdites impressions intermédiaires, la matière d'impression apte à l'écoulement (10) ou les matières utilisées dans ledit autre procédé de moulage ayant une viscosité Brookfield à la température d'application telle qu'elles peuvent être déversées d'un conteneur par gravité.

2. Procédé selon la revendication 1, **caractérisé en ce que** la texture souhaitée est découpée au moyen d'un faisceau laser (4) dans le matériau de départ.

3. Procédé selon la revendication 1 ou 2, **caractérisé en ce que** ladite feuille élastique (12) est réalisée en moulant ladite matière d'impression (10) par pulvérisation, versement, injection ou étalement de celle-ci en une couche sur le matériau de départ (1), la matière d'impression (10) étant de préférence du PVC fondu apte à l'écoulement, du caoutchouc au silicone apte à l'écoulement ou un mélange de réaction de polyuréthanne liquide, la préférence étant plus particulièrement donnée à l'utilisation d'un mélange de réaction de polyuréthanne liquide.

4. Procédé selon l'une quelconque des revendications 1 à 3, **caractérisé en ce que** la structure de chemisage (24) est réalisée en un métal ou en un alliage de métaux qui est graduellement déposé sur le modèle maître (14) ou sur une desdites impressions intermédiaires (15, 18), en particulier par placage de métal dans une cellule électrolytique ou par un processus de dépôt de métal en phase vapeur, le métal étant de préférence du nickel.

5. Procédé selon l'une quelconque des revendications 1 à 4, **caractérisé en ce que** ladite feuille élastique (12) présente un allongement à la rupture, mesuré selon ISO 527-3/2/100, d'au moins 20 %, de préférence d'au moins 50 %, et plus préférablement d'au moins 100 %.

6. Procédé selon l'une quelconque des revendications 1 à 5, **caractérisé en ce qu'**il comprend l'étape supplémentaire consistant à utiliser le moule (26) pour produire des films élastomères par un processus de moulage par pulvérisation, par injection réactive ou par embouage contre ladite surface de moule.

7. Procédé selon la revendication 6, **caractérisé en ce que** les films élastomères sont produits en appliquant un mélange de réaction de polyuréthanne soit par un procédé de pulvérisation ou un procédé RIM contre la surface de moule et en permettant au mélange de réaction de durcir, un revêtement en moule (« in-mould »), en particulier une peinture en moule étant facultativement appliquée en premier contre la surface de moule.
